# EUROPEAN PATENT APPLICATION

(11) **EP 2 187 203 A1**
(43) Date of publication of application: **19.05.2010**
(21) Application number: 08829782.5
(22) Date of filing: 01.09.2008
(51) Int. Cl.: G01N 27/327, G01N 27/02, G01N 27/04, G01N 27/28, G01N 35/02

(54) **SHEET FOR DEVELOPING LIQUID**

(30) Priority: 07.09.2007 JP 2007232349
(71) Applicant: Toray Industries, Inc., Tokyo 103-8666 (JP)
(72) Inventor: NINOMIYA, Hirokazu, Otsu-shi Shiga 520-8558 (JP); ITO, Kiyohiko, Otsu-shi Shiga 520-8558 (JP)
(74) Representative: Kador, Ulrich
(86) International application number: PCT/JP2008/065629
(87) International publication number: WO 2009/031484

(57) **Abstract**

This invention is a liquid-developing sheet comprising a liquid-accepting layer at least on one surface of a substrate, wherein said liquid-accepting layer contains a binder and a block copolymer comprising blocks of ethylene oxide units and blocks of alkylene oxide units with 3 or more carbon atoms. This invention can provide a liquid-developing sheet for a biosensor, which shows stable liquid developability even at high temperature and high humidity and is good in the adhesion between the liquid-accepting layer and the substrate. If the liquid-developing sheet of this invention is used, the accuracy of measurement by the biosensor can be enhanced.

## Description

### TECHNICAL FIELD

The present invention relates to a liquid-developing sheet to be installed in a biosensor used for inspecting or determining a slight amount of a specific component in any of various liquid samples, for example, a specific component in a bioliquid such as a blood or urine. Particularly this invention relates to a liquid-developing sheet for assisting the introduction of a liquid sample into a cavity of a biosensor provided with the cavity into which the liquid sample is introduced by capillary action.

### BACKGROUND ART

As a biosensor for determining a specific component in a liquid sample, there is, for example, a biosensor for finding a blood sugar level or the like by measuring the current value generated by the reaction between the glucose in a blood and a reagent such as glucose oxidase or potassium ferricyanide loaded in the sensor (see Patent Document 1).

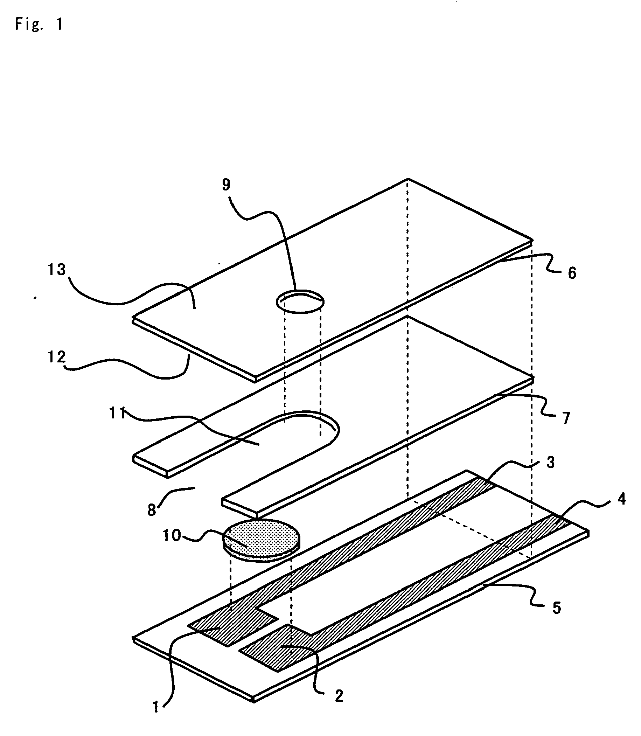

Fig. 1 is an exploded perspective view showing an example of a conventional biosensor for measuring a blood sugar level. Meanwhile, the basic constitution of the biosensor shown in Fig. 1 is also equivalent to that of the biosensor of this invention. In Fig. 1, a work electrode 1 and a counter electrode 2 are formed by screen printing or the like on an insulation board 5 formed of polyethylene terephthalate or the like. On these electrodes, formed is a reagent layer 10 containing glucose oxidase as an enzyme, potassium ferricyanide as an electron transporter, carboxymethyl cellulose as a hydrophilic polymer, etc.

In this biosensor, a certain amount of a blood is secured in a cavity 11, and the current value generated by the reaction between the secured blood and the reagent layer 10 is detected by the abovementioned electrodes. To form the cavity 11, a cover film 6 and the insulation board 5 are stuck to each other via a spacer 7. A narrow, long aperture corresponding to the electrodes and the reagent layer is provided in the spacer 7. In the cover film 6, an air escape hole 9 is formed.

In the biosensor with this constitution, the blood is introduced into the cavity 11 from a suction port 8 by capillary action, and guided to the position where the electrodes and the reagent layer are located. Further, the current value generated by the reaction between the blood and the reagents on the electrodes is transmitted via leads 3 and 4 to be measured by an outside measuring instrument not illustrated.

However, it is difficult to smoothly introduce the blood into the cavity 11 only by the abovementioned capillary action. For introducing the blood more quickly and accurately, employed is a contrivance such as applying a surfactant layer 12 of egg yolk lecithin or the like for covering the reagent layer 10 from above.

However, these methods are likely to cause variation in the speed of sucking the liquid sample into the cavity. Especially during the preservation in a high-temperature high-humidity environment, the surfactant is likely to bleed for causing the variation in the measurement by the sensor.
Patent Document 1: JP 10-318970 A

### DISCLOSURE OF THE INVENTION

### PROBLEM TO BE SOLVED BY THE INVENTION

In view of the background of the prior art as described above, this invention provides a liquid-developing sheet for a biosensor, which allows measurement with a small amount of a specimen at a high specimen absorbing rate and at a high accuracy of measurement.

### MEANS FOR SOLVING THE PROBLEM

To solve the abovementioned problem, this invention employs the following means. That is, the liquid-developing sheet of this invention comprises a liquid-accepting layer at least on one surface of a substrate, wherein the liquid-accepting layer contains a binder and a block copolymer comprising blocks of ethylene oxide units and blocks of alkylene oxide units, each with 3 or more carbon atoms.

### EFFECT OF THE INVENTION

This invention can provide a liquid-developing sheet for a biosensor, which shows stable liquid developability even at high temperature and high humidity and is good in the adhesion between the liquid-accepting layer and the substrate. If the liquid-developing sheet of this invention is used, the accuracy of measurement by the biosensor can be enhanced.

### BRIEF DESCRIPTION OF THE DRAWING

[Fig. 1] is an exploded perspective view showing a main constitution of a biosensor.

### MEANING OF SYMBOLS

- 1 .: work electrode
- 2: counter electrode
- 3: lead for the work electrode
- 4: lead for the counter electrode
- 5: insulation board
- 6: cover film
- 7: spacer
- 8: suction port
- 9: air escape hole
- 10: reagent layer
- 11: cavity
- 12: surfactant layer
- 13: rear surface of the substrate

### THE BEST MODES FOR CARRYING OUT THE INVENTION

This invention relates to a so-called liquid-developing sheet that allows a liquid to be quickly introduced from the suction hole of a biosensor, particularly, a test sheet of an electrode system (electric conductivity measurement). The liquid-developing sheet has a liquid-accepting layer at least on one surface of a substrate. When a liquid-accepting layer containing a binder and a block copolymer comprising a specific combination with alkylene oxide units was used as the liquid-developing sheet of this invention, it was found that the aforementioned problem could be solved.

The examples of the binder constituting the liquid-accepting layer include organic binders such as polyester resin, ethylene-vinyl acetate copolymer resin, ionomer resin, urethane resin, nylon resin, ethylene-acrylic acid copolymer resin, ethylene-ethyl acrylate copolymer resin, ethylene-methyl acrylate copolymer resin, ethylene-methacrylic acid copolymer resin, ethylene-vinyl alcohol copolymer resin, polyvinyl butyral resin, polystyrene resin, polyalkylene oxide resin and gelatin, inorganic binders containing zirconium, silicon, aluminum and titanium atoms, etc. Among them, in view of the adhesive strength to the substrate, liquid wettability, developability, etc., it is preferred to use a polyester resin as the binder.

The block copolymer comprising blocks of ethylene oxide units and the blocks of alkylene oxide units, each with 3 or more carbon atoms functions to adjust the surface resistance value and critical surface tension of the liquid-accepting layer. It is preferred to contain said block copolymer since liquid wettability and developability are good.

HO-(CH₂CH₂O)₁-(R₁-Oₘ-(CH₂CH₂O)ₙ-H (1)

HO-(R₂-O)ₒ-(CH₂CH₂O)ₚ-(R₃-O)_{q}-H (2)

where R₁, R₂ and R₃ denote an alkylene group with 3 or more carbon atoms, and 1, m, n, o, p and q denote an integer. Meanwhile, the compounds represented by the abovementioned general formulae (1) and (2) can be identified by ¹H-NMR or ¹³C-NMR.

Examples of the ethylene oxide/alkylene oxide/ethylene oxide type block copolymer represented by the abovementioned general formula (1) include Pluronic (R) PE3100, PE3500, PE4300, PE6100, PE6120, PE6200, PE6400, PE6800, PE7400, PE8100, PE9200, PE9400, PE10100, PE10300, PE10400 and PE10500 (respectively produced by BASF Japan Ltd.), Adeka (R) Pluronic L-23, L-31, L-33, L-34, L-35, F-38, L-42, L-43, L-44, L-61, L-62, L-64, P-65, F-68, L-71, L-72, P-75, P-77, L-81, P-84, P-85, F-88, L-92, P-94, F-98, L-101, P-103, P-104, P-105, F-108, L-121, L-122, P-123 and F-127 (respectively produced by Adeka Corporation), Newpole PE-34, PE-61, PE-62, PE-64, PE-68, PE-71, PE-74, PE-75, PE-78, PE-108 and PE-128 (respectively produced by Sanyo Chemical Industries, Ltd.), Pronon (R) #124P, #188P and #407P (respectively produced by NOF Corporation), etc. Examples of the alkylene oxide/ethylene oxide/alkylene oxide type block copolymer represented by the abovementioned general formula (2) include Pluronic (R) RPE1720, RPE1740, RPE2035, RPE2510, RPE2520, RPE2525 and RPE3110 (respectively produced by BASF Japan Ltd.), Adeka (R) Pluronic 17R-2, 17R-3, 17R-4, 25R-1 and 25R-2 (respectively produced by Adeka Corporation), etc.

Among the block copolymers, it is preferred that the number of carbon atoms of each alkylene oxide unit shown in the abovementioned general formulae is 3 to 5. Though the clear reason is unknown, the experiment performed by the present inventors showed that when the number of carbon atoms of each alkylene oxide unit was 6 or more, the liquid developability varied. It was demonstrated that above all, especially when the alkylene oxide units are propylene oxide units, the liquid developability is better.

It is preferred that the number average molecular weight of the block copolymer measured by gel permeation chromatography (GPC) is 500 or more. A more preferred range is 900 to 20000, and an especially preferred range is 1500 to 15000. That is, it is preferred that the number average molecular weight of the block copolymer is 500 or more, since the liquid developability by the liquid-accepting layer is good, to stabilize the accuracy of measurement, allowing the measurement to be completed in a short period of time. It is preferred that the number average molecular weight is 20000 or less, since the block copolymer is likely to be dispersed homogeneously into the binder.

Further, it is preferred that the hydroxyl group value of the block copolymer measured according to JIS K 0070 (1992) is 5 to 200 mg KOH/g. A more preferred range is 10 to 100 mg KOH/g. It is preferred that the hydroxyl group value is 5 mg KOH/g or more, since the compatibility with the binder and the adhesion to the substrate are good. Further, it is preferred that the hydroxyl group value is 200 mg KOH/g or less for such reasons that the liquid wettability and developability are good and that the accuracy of measurement can be stabilized.

Furthermore, it is preferred that the melting point of the block copolymer measured according to JIS K 0064 (1992) is 25°C or higher. More preferred is 30°C or higher. Further, it is preferred that the upper limit of the melting point is 70°C or lower. More preferred is 60°C or lower. It is preferred that the melting point of the block copolymer is 25°C or higher, since the block copolymer is unlikely to bleed from the liquid-accepting layer; hence when the liquid-developing sheet is formed and wound, the liquid-accepting layer is unlikely to be transferred to the rear surface of the substrate. In the case where the liquid-accepting layer is transferred to the rear surface of the substrate, when said liquid-developing sheet is used for sucking a liquid, the liquid is spread also on the rear surface of the substrate, to secure more than a certain amount of the liquid and to destabilize the accuracy of measurement.

Moreover, the weight rate of polyethylene oxide in the block copolymer is not especially limited, but a range from 1 to 90 wt% is suitable. A more suitable range is 5 to 80 wt%. The weight rate of polyethylene oxide refers to the rate of the weight of ethylene oxide units contained in the block copolymer based on the total weight of said block copolymer. It is preferred that the weight rate of polyethylene oxide is 1 wt% or more, since the liquid wettability and developability of the liquid-accepting layer are good. It is preferred that the weight rate of polyethylene oxide is 90% or less, since the compatibility with the binder and the adhesion to the substrate are good.

It is preferred that the content of the block copolymer is 0.1 to 3.0 parts by weight per 100 parts by weight of the binder. A more preferred range is 0.5 to 20 parts by weight, and an especially preferred range is 1 to 15 parts by weight. It is preferred that the content of the block copolymer is 0.1 part by weight or more, since the liquid wettability and developability of the liquid-accepting layer are good. It is preferred that the content of the block copolymer is 30 parts by weight or less for such reasons that the adhesion to the substrate is good and that the blocking caused by the bleeding of the block copolymer on the surface of the liquid-accepting layer is unlikely to occur.

Further, it is preferred that the liquid-accepting layer contains a crosslinking agent capable of reacting with hydroxyl groups. If the liquid-accepting layer contains a crosslinking agent capable of reacting with hydroxyl groups, the adhesive strength between the liquid-accepting layer and the substrate can be enhanced.

Examples of the crosslinking agent capable of reacting with hydroxyl groups include publicly known compounds such as isocyanate compound, glycidyl compound, oxazoline compound and metal chelate compound. Among them, a polyisocyanate can be preferably used.

The polyisocyanate is not especially limited, and any of polyisocyanurates, biuret polyisocyanates and adduct polyisocyanates can be suitably used. Among them, adduct polyisocyanates can be suitably used. Examples of the adduct polyisocyanates include trimethylolpropane adducts of tolylene diisocyanate, diphenylmethane diisocyanate, hexamethylene diisocyanate, xylene diisocyanate, isophorone diisocyanate, etc.

As the substrate used in this invention, a plastic film, synthetic paper, paper or a composite sheet treated on the surface can be preferably used. Among them, a plastic film is preferred in view of dimensional stability, durability, etc.

Examples of the material of the plastic film include polyesters, polyolefins, polyamides, polyester amides, polyethers, polyimides, polyamideimides, polystyrene, polycarbonates, poly-p-phenylene sulfide, polyether esters, polyvinyl chloride and poly(meth)acrylic acid esters. Further, copolymers and blends of these compounds and compounds obtained by crosslinking these compounds can also be used.

Among the abovementioned plastic films, a film made of a polyester, for example, polyethylene terephthalate, polyethylene-2,6-naphthalate, polyethylene-α,β-bis(2-chlorophenoxy)ethane-4,4'-dicarboxylate or polybutylene terephthalate, etc. is preferred. Among them, generally considering such quality as mechanical properties and workability, economy, etc., a polyethylene terephthalate film can be especially preferably used.

The thickness of the substrate is not especially limited, but is usually 10 µm to 500 µm. A preferred range is 20 µm to 300 µm, and a more preferred range is 30 µm to 200 µm.

Further, it is preferred that the amount of the liquid-accepting layer deposited on the substrate is 0.1 to 5 g/m². A more preferred range is 0.5 to 5 g/m². If the deposited amount is smaller than 0.1 g/m², the liquid-accepting layer may come off due to the scratches or the like made during processing, and pinholes may be formed. As a result, the accuracy of measurement may decline. Further, if the deposited amount is larger than 5 g/m², workability may decline and blocking may be liable to occur.

The means for producing the liquid-developing sheet of this invention is explained below. For example, the liquid-accepting layer can be formed as a coating film by coating the substrate with a coating solution containing the components constituting said liquid-accepting layer. The coating solution can be obtained by mixing the aforementioned binder and the aforementioned block copolymer and diluting the mixture to a desired concentration using an organic solvent such as toluene or methyl ethyl ketone (MEK) or water or the like as a solvent.

The method for applying the coating solution is not especially limited but can be a gravure coating method, reverse coating method, kiss coating method, die coating method or bar coating method, etc. In this case, before the substrate is coated with the coating solution, as required, surface treatment such as corona discharge treatment in air or any other atmosphere, or primer treatment can be applied to enhance coatability and to form the liquid-accepting layer more strongly on the substrate. Meanwhile, the concentration of the coating solution and the conditions for drying the coating film are not especially limited, but it is desired to select the concentration and drying conditions within the ranges in which the respective properties of the substrate are not adversely affected. In general, it is preferred that the coating solution concentration is such that the amount of the liquid-accepting layer components is 1 to 50 wt% based on the amount of the coating solution. It is preferred to dry the coating film at 70 to 160°C for about 10 seconds to about 5 minutes.

Further, the liquid-accepting layer can also be formed by forming a filmy substance beforehand using the abovementioned coating solution and sticking the filmy substance to the substrate. In the case where sticking is performed, employed is a method of coating a releasable film such as a silicone-based resin film with the coating solution and then transferring the filmy substance formed from the coating solution onto the substrate.

### EXAMPLES

This invention is explained below more particularly in reference to examples, but is not limited thereto or thereby. Meanwhile, in the examples, the properties of specimens were evaluated by the following methods.

### (Example 1)

### [Methods for preparing respective members]

The methods for preparing respective members are explained below.

### (1) Spacer preparing method

A polyethylene terephthalate (PET) film "Lumirror" (R) (type 100E20) produced by Toray Industries, Inc. was used as the substrate. Further, a 30% solution obtained by dissolving a polyester-based adhesive resin with a softening point of 105°C (Pes-resin S140 produced by Takamatsu Oil & Fat Co. , Ltd.) into toluene/MEK (methyl ethyl ketone) = 4/1 (weight ratio) was prepared as the coating solution. A silicone-based releasing film was coated with said 30% solution using a comma coater and dried at 120°C for 2 minutes, and subsequently, the polyester-based adhesive resin was transferred onto one surface of the substrate. Similarly the polyester-based adhesive resin was transferred also onto the other surface of the substrate, to obtain a spacer film having a polyester-based adhesive resin layer on each of both the surfaces. The thickness of each of the polyester-based adhesive resin layers was 20 µm.

### (2) Cover film preparing method

A polyethylene terephthalate (PET) film "Lumirror" (R) (type 100T60) produced by Toray Industries, Inc. was used as the substrate. Further, a solution obtained by diluting a mixture consisting of 100 parts by weight of the polyester resin Pes-resin S-140 produced by Takamatsu Oil & Fat Co., Ltd. and 5 parts by weight of a block copolymer A represented by the general formula (1) (NewpolePE-64 produced by Sanyo Chemical Industries, Ltd.; alkyl group R₁ propylene; polyethylene oxide weight rate 40%; number average molecular weight (Mn) 3016; hydroxyl group value 37.2 mg KOH/g) into toluene/MEK = 1/1 (weight ratio) to achieve a concentration of 15 wt% was prepared as the coating solution. The substrate was coated on one surface with the coating solution using a gravure coater and dried at 120°C for 30 seconds, to obtain a cover film having a liquid-accepting layer. The coating thickness of the liquid-accepting layer was 1.0 g/m².

### [Cavity forming method]

The spacer prepared according to the procedure of the aforementioned preparation method (1) and the cover film having a liquid-accepting layer prepared according to the procedure of the aforementioned preparation method (2) were bonded onto a polyethylene terephthalate (PET) film "Lumirror" (R) (type 250H10) produced by Toray Industries, Inc., to prepare a specimen having a 1.2 mm wide, 140 µm high and 20 mm long cavity. Meanwhile, the cover film was bonded in such a manner that the liquid-accepting layer might face the spacer.

### (Evaluation of liquid developability)

Three specimens prepared according to the procedure of the abovementioned method for forming a cavity and exposed in an atmosphere of 23°C and 65% RH for 5 days, and three other specimens prepared likewise and exposed in an atmosphere of 40°C and 90% RH for 5 days were prepared. A blood with hematocrit adjusted to 45% was applied to the tip of the suction hole of each specimen, to introduce the blood by capillary action into the abovementioned cavity. The time taken for the blood to reach the position of 15 mm in the cavity after applying the blood to the tip of the suction hole was measured. The mean value of three specimens was referred to for evaluating the liquid developability.

### (Adhesion to the substrate)

The adhesion between the liquid-accepting layer of the cover film prepared according to the procedure of the abovementioned cover film preparing method and the substrate was evaluated by the cross cut method according to JIS K 5600-5-6. The minimum value of three specimens was referred to for evaluating the adhesion.

### (Example 2)

Specimens were prepared for evaluation as described in Example 1, except that 20 parts by weight of a block copolymer B represented by the general formula (1) (Adeka (R) Pluronic F-68 produced by Adeka Corporation; alkyl group R₁ propylene; polyethylene oxide weight rate 80%; number average molecular weight (Mn) 8436; hydroxyl group value 13.3 mg KOH/g) were used instead of 5 parts by weight of the block copolymer A in the abovementioned cover film preparing method.

### (Example 3)

Specimens were prepared for evaluation as described in Example 1, except that 25 parts by weight of a block copolymer C represented by the general formula (2) (Adeka (R) Pluronic 17R-2 produced by Adeka Corporation; alkyl groups R₂ and R₃ propylene; polyethylene oxide weight rate 20%; number average molecular weight (Mn) 2183; hydroxyl group value 51.4 mg KOH/g) were used instead of 5 parts by weight of the block copolymer A in the abovementioned cover film preparing method.

### (Example 4)

Specimens were prepared for evaluation as described in Example 1, except that 10 parts by weight of a block copolymer D represented by the general formula (1) (Pluronic (R) 3100 produced by BASF Japan Ltd.; alkyl group R₁ propylene; polyethylene oxide weight rate 10%; number average molecular weight (Mn) 1146; hydroxyl group value 97.9 mg KOH/g) were used instead of 5 parts of the block copolymer A in the abovementioned cover film preparing method.

### (Example 5)

Specimens were prepared for evaluation as described in Example 1, except that 5 parts by weight of Takenate D-110N (trimethylpropane adduct type xylene diisocyanate produced by Mitsui Polyurethane K.K.) were further added as a polyisocyanate component per 100 parts by weight of the polyester resin to the coating solution in the abovementioned cover film preparing method.

### (Comparative Example 1)

Specimens were prepared for evaluation as described in Example 1, except that 5 parts by weight of a polyoxyethylene alkyl ether (Naroacty CL20 produced by Sanyo Chemical Industries, Ltd.) were used instead of 5 parts by weight of the block copolymer A in the abovementioned cover film preparing method.

### (Comparative Example 2)

Specimens were prepared for evaluation as described in Example 1, except that 20 parts by weight of a sorbitan ester ether type nonionic surfactant (Sorbon T-20 produced by Toho Chemical Industry Co., Ltd.) were used instead of 5 parts by weight of the block copolymer A in the abovementioned cover film preparing method.

### (Comparative Example 3)

Specimens were prepared for evaluation as described in Example 1, except that 20 parts by weight of an imidazoline type cationic surfactant (Cation SF-10 produced by Sanyo Chemical Industries, Ltd.) were used instead of 5 parts by weight of the block copolymer A in the abovementioned cover film preparing method.

### (Example 6)

Specimens were prepared for evaluation as described in Example 1, except that a 30% solution obtained by dissolving a polyester-based adhesive resin (Pes-resin S120 produced by Takamatsu Oil & Fat Co., Ltd.) into toluene/MEK (methyl ethyl ketone) = 4/1 (weight ratio) was used in the abovementioned spacer preparing method, and that 5 parts by weight of a block copolymer E represented by the general formula (1) (Adeka (R) Pluronic P-84 produced by Adeka Corporation; alkyl group R₁ propylene; polyethylene oxide weight rate 40%; number average molecular weight (Mn) 4332; hydroxyl group value 25.9 mg KOH/g; melting point 34°C) were used instead of 5 parts by weight of the block copolymer A in the abovementioned cover film preparing method.

### (Evaluation of transferability to the rear surface of the substrate)

A polyethylene terephthalate (PET) film "Lumirror" (R) (type 100T60) produced by Toray Industries, Inc. was overlaid on the liquid-accepting layer of a specimen obtained in the abovementioned cover film preparing method, and the laminate as loaded with 2 kPa from above was allowed to stand in an atmosphere of 23°C and 65% RH for 5 days. Subsequently the polyethylene terephthalate (PET) film was removed from the specimen, and a 60 mN/m solution of a wetting reagent produced by Wako Pure Chemical Industries, Ltd. was added dropwise to the surface that had been contacted by the liquid-accepting layer, to check whether or not the surface repelled the reagent. In the case where the components of the liquid-accepting layer were transferred to the PET film, the repellency of the reagent did not occur since the wettability of the PET film surface was enhanced. That is, when the surface repels the reagent, it shows that the components of the liquid-accepting layer are not transferred to the PET film.

### (Example 7)

Specimens were prepared for evaluation as described in Example 6, except that 5 parts by weight of a block copolymer F represented by the general formula (1) (Newpole PE-61 produced by Sanyo Chemical Industries, Ltd); alkyl group R₁ propylene; polyethylene oxide weight rate 10%; number average molecular weight (Mn) 1979; hydroxyl group value 56.7 mg KOH/g; melting point -30°C) were used instead of 5 parts by weight of the block copolymer E in the cover film preparing method.

### (Example 8)

Specimens were prepared for evaluation as described in Example 6, except that 5 parts by weight of a block copolymer G represented by the general formula (1) (Adeka (R) Pluronic L-121 produced by Adeka Corporation; alkyl group R₁ propylene; polyethylene oxide weight rate 10%; number average molecular weight (Mn) 4714; hydroxyl group value 23.8 mg KOH /g; melting point 5°C) were used instead of 5 parts by weight of the block copolymer E in the cover film preparing method.

**[Table 1]**

| | Liquid developability (seconds) | | Adhesion to substrate by cross cut method (JIS K 5600-5-6) |
|---|---|---|---|
| | Stored at 23°C and 65% RH for 5 days | Stored at 40°C and 90% RH for 5 days | |
| Example 1 | 3.76 | 3.55 | 89/100 |
| Example 2 | 4.01 | 3.93 | 93/100 |
| Example 3 | 3.49 | 3.20 | 97/100 |
| Example 4 | 3.11 | 3.21 | 92/100 |
| Example 5 | 4.22 | 4.31 | 100/100 |
| Comparative Example 1 | 6.23 | 4.41 | 8/100 |
| Comparative Example 2 | 7.22 | 5.58 | 16/100 |
| Comparative Example 3 | 6.70 | No suction | 0/100 |

**[Table 2]**

| | Liquid developability (seconds) | | Adhesion to substrate by cross cut method | Transferability to the rear surface of substrate |
|---|---|---|---|---|
| | Stored at 23°C and 65% RH for 5 days | Stored at 40°C and 90% RH for 5 days | | |
| Example 6 | 3.33 | 3.21 | 96/100 | With repellency |
| Example 7 | 3.55 | 3.48 | 95/100 | Without repellency |
| Example 8 | 3.77 | 3.58 | 95/100 | Without repellency |

As can be seen from Tables 1 and 2, the liquid-accepting layer obtained in each example showed stable liquid developability also during storage in a high-temperature high-humidity environment and was good also in the adhesion to the substrate.

On the contrary, the liquid-accepting layer obtained in each of Comparative Examples 1 to 3 was not stable in liquid developability and was also poor in the adhesion to the substrate, since it did not contain a block copolymer consisting of the block units represented by the general formula (1) or (2).

Further, the liquid-developing sheet obtained in Example 6 showed stable liquid developability, since the liquid-accepting layer components were not transferred to the rear surface of the substrate.

On the contrary, in each of the liquid-developing sheets obtained in Examples 7 and 8, the liquid-accepting layer components were transferred to the rear surface of the substrate, since the melting point of the block copolymer was not 25°C or higher. For this reason, if the liquid-developing sheet is installed in a biosensor and a liquid is kept in contact with the liquid suction port of the biosensor, then the liquid is sucked into the cavity of the biosensor while the liquid spreads also on the rear surface of the substrate of the liquid-development sheet, to lower the accuracy of measurement.

### INDUSTRIAL APPLICABILITY

The liquid-developing sheet of this invention can be used for inspecting or determining a specific component contained in a biosample such as a blood or urine or in a sample of a raw material, product, fruit juice or the like in the food industry. Above all, it can be suitably used for inspecting or determining a specific component of a bioliquid such as a blood or urine.

## Claims

1. A liquid-developing sheet comprising a liquid-accepting layer at least on one surface of a substrate, wherein said liquid-accepting layer contains a binder and a block copolymer comprising blocks of ethylene oxide units and blocks of alkylene oxide units with 3 or more carbon atoms.

2. A liquid-developing sheet, according to claim 1, wherein the number of carbon atoms of said alkylene oxide units is 3 to 5.

3. A liquid-developing sheet, according to claim 2, wherein the said alkylene oxide units are propylene oxide units.

4. A liquid-developing sheet, according to any one of claims 1 through 3, wherein said block copolymer is represented by the following general formula (1) or (2):
HO-(CH₂CH₂O)₁-(R₁-O)ₘ-(CH₂CH₂O)ₙ-H (1)
HO-(R₂-O)ₒ-(CH₂CH₂O)ₚ-(R₃-O)_{q}-H (2)
where R₁, R₂ and R₃ denote an alkylene group with 3 or more carbon atoms, and 1, m, n, o, p and q denote an integer.

5. A liquid-developing sheet, according to any one of claims 1 through 4, wherein the melting point of said block copolymer is 25°C or higher.

6. A liquid-developing sheet, according to any one of claims 1 through 5, wherein the number average molecular weight of said block copolymer is 500 or more.

7. A liquid-developing sheet, according to any one of claims 1 through 6, wherein the hydroxyl group value of said block copolymer is 5 to 200 mg KOH/g.

8. A liquid-developing sheet, according to any one of claims 1 through 7, wherein said liquid-accepting layer contains a crosslinking agent capable of reacting with hydroxyl groups.

9. A liquid-developing sheet, according to claim 8, wherein said
